# EUROPEAN PATENT APPLICATION

(11) **EP 2 306 365 A1**
(43) Date of publication of application: **06.04.2011**
(21) Application number: 10176152.6
(22) Date of filing: 10.09.2010
(51) Int. Cl.: G06F 21/24

(54) **Apparatus and method for log management, and computer-readable storage medium for computer program**

(30) Priority: 16.09.2009 JP 2009214689
(71) Applicant: Konica Minolta Business Technologies, Inc., Chiyoda-ku Tokyo 100-0005 (JP)
(72) Inventor: Sugimoto, Tetsuya, Tokyo 100-0005 (JP)
(74) Representative: HOFFMANN EITLE

(57) **Abstract**

An apparatus for log management includes an obtaining portion that obtains a first log of a process that has been performed, a second log generating portion that creates a second log by replacing confidential information, which is contained in the first log and is to be kept secret, with second information that is different from the confidential information, and a second log output portion that outputs the second log.

## Description

The present invention relates to an apparatus, a method, and the like for log management.

Apparatuses such as a server and a personal computer have conventionally recorded processing status thereof. Such a record is generally called a "log".

Image processing apparatuses called "multifunction devices", "Multi-Function Peripherals (MFPs)", or the like have recently come into widespread use in offices of business and home. Such an image processing apparatus is a device that integrates a variety of functions, such as copying, network printing (PC printing), faxing, and scanning, into a single unit. Such an image processing apparatus also logs the activity thereof.

A consumer using an image processing apparatus often signs a maintenance contract with a manufacturer or a dealer of the image processing apparatus. If a problem occurs in the image processing apparatus, the manufacturer or the dealer thereof sometimes analyzes a log of the image processing apparatus to identify why the problem has happened, and fixes the image processing apparatus based on the analysis result.

The manufacturer or the dealer analyzes the log at the installation site of the image processing apparatus in some cases, or carries the log to their workplace for analysis in other cases.

There are proposed some methods in which a consumer externally supplies information such as a log. For example, such methods disclose that a server transmits information such as a log to an external device via the Internet (see Japanese Laid-open Patent Publication Nos. 2002-175200 and 2008-268999).

However, a log of a device sometimes includes personal information as-is, or includes information that can identify a person who has given a command to execute a job. Since such information is confidential information for a consumer, it is desirable that the information is not known by a manufacturer or a dealer of the device. However, if such information is not disclosed to the manufacturer or the dealer, it may be impossible to identify a failure of the device, or it may take an amount of time to identify the failure.

It is therefore desirable to provide a log of an apparatus to a manufacturer or a dealer of the apparatus with user's confidential information on the log protected in such a manner that the manufacturer or the dealer finds the state of a failure of the apparatus or the like as per conventional ways if at all possible.

According to an aspect of the present invention, an apparatus for log management includes an obtaining portion that obtains a first log of a process that has been performed, a second log generating portion that creates a second log by replacing confidential information, which is contained in the first log and is to be kept secret, with second information that is different from the confidential information, and a second log output portion that outputs the second log.

Preferably, the apparatus for log management further includes a storage portion that stores the confidential information in association with the second information with which said confidential information has been replaced. The obtaining portion obtains the first log every time the process is performed. Every time the obtaining portion obtains the first log, the second log generating portion creates the second log in the following manner: If the storage portion stores, therein, the second information corresponding to the confidential information contained in the first log thus obtained, the second log generating portion replaces said confidential information with said second information, and if the storage portion does not store, therein, the second information corresponding to the confidential information contained in the first log thus obtained, the second log generating portion replaces said confidential information with new second information.

In the case where the apparatus for log management is applied to an MFP, i.e., an image processing apparatus for performing image-related processing, the image processing apparatus further includes a third log generating portion that creates a third log by replacing the second information contained in the second log with the confidential information corresponding to said second information, and a third log output portion that outputs the third log. If an operator who has made a request for outputting a log is the person other than the user, the second log output portion outputs the second log. If the operator is the user, the third log output portion outputs the third log.

These and other characteristics and objects of the present invention will become more apparent by the following descriptions of preferred embodiments with reference to drawings.

Reference will now be made, by way of example, to the accompanying drawings, in which:
Fig. 1 is a diagram illustrating an example of the overall configuration of a network system.
Fig. 2 is a diagram illustrating an example of the hardware configuration of an image forming apparatus.
Fig. 3 is a diagram illustrating an example of the functional configuration of an image forming apparatus.
Figs. 4A-4C are diagrams illustrating examples of log data.
Figs. 5A-5C are diagrams illustrating examples of a job log table.
Figs. 6A and 6B are diagrams illustrating examples of a pseudo name/real name correspondence table.
Fig. 7 is a flowchart depicting an example of the flow of a log registration process.
Fig. 8 is a flowchart depicting an example of the flow of an in-house administrator log file generating process.
Fig. 9 is a flowchart depicting an example of the flow of an external administrator log file generating process.
Fig. 10 is a flowchart depicting an example of the overall processing flow of an image forming apparatus.
Fig. 11 is a flowchart depicting an example of the flow of a cooperative work log file generating process.

Hereinafter, the present invention will be explained in more detail with reference to embodiments and drawings.

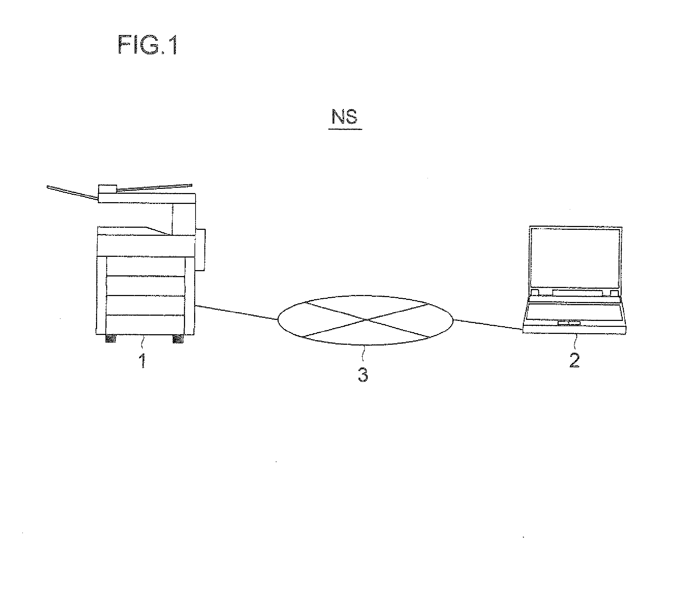

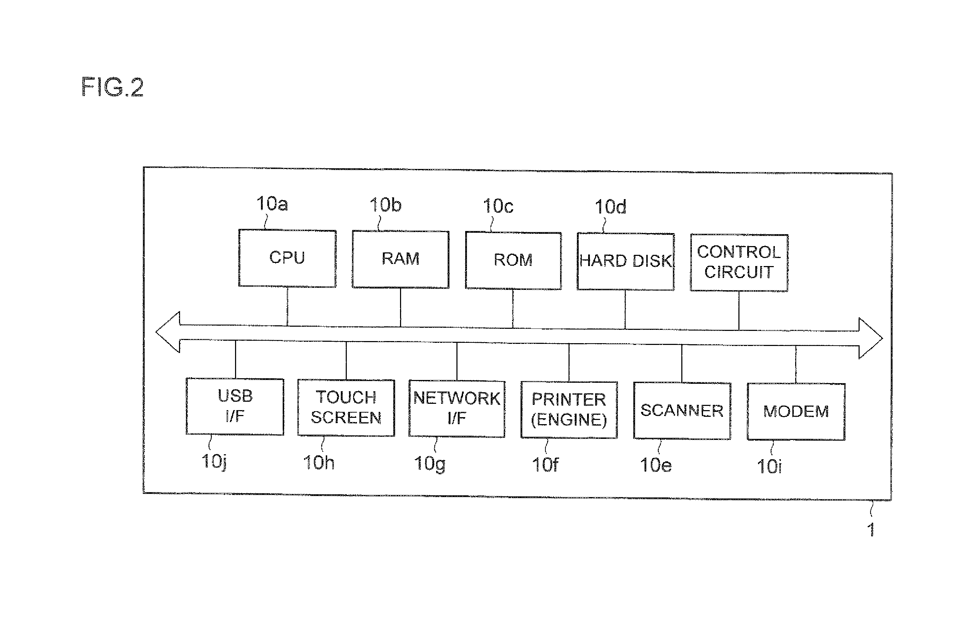

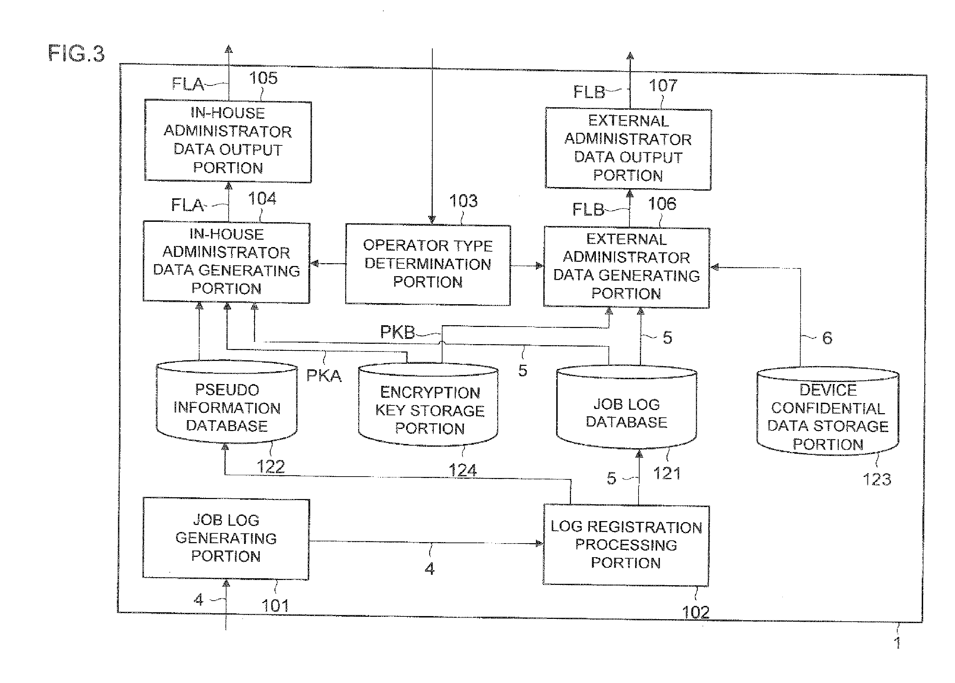

Fig. 1 is a diagram illustrating an example of the overall configuration of a network system NS; Fig. 2 is a diagram illustrating an example of the hardware configuration of an image forming apparatus 1; and Fig. 3 is a diagram illustrating an example of the functional configuration of the image forming apparatus 1.

Referring to Fig. 1, the network system NS is configured of the image forming apparatus 1, a terminal 2, a communication line 3, and so on. The image forming apparatus 1 and the terminal 2 are connectable to each other via the communication line 3. Examples of the communication line 3 are a public line, a dedicated line, the Internet, and a so-called Local Area Network (LAN).

The network system NS is installed in organizations such as public offices or business offices, and is used by members belonging to such an organization. The following is a description of an example in which the network system NS is used in an X-company. An employee of the X-company is hereinafter referred to as a "user". The user is given a unique user identification (ID).

The image forming apparatus 1 is an image processing apparatus generally called a multifunction device or a Multi Function Peripheral (MFP). The image forming apparatus 1 is a device that integrates a variety of functions, such as copying, PC printing (network printing), faxing, scanning, and so on, into a single unit.

Referring to Fig. 2, the image forming apparatus 1 is configured of a Central Processing Unit (CPU) 10a, a Random Access Memory (RAM) 10b, a Read Only Memory (ROM) 10C, a hard disk 10d, a scanner 10e, a printer 10f, a network interface 10g, a touchscreen 10h, a modem 10i, a Universal Serial Bus (USB) interface 10j, a control circuit, and so on.

The scanner 10e is a device that reads images printed on paper, such as photographs, characters, drawings, diagrams, and the like, and creates image data thereof.

The printer 10f serves to print, onto paper, an image obtained by scanning with the scanner 10e or an image included in image data received from another device.

The touchscreen 10h displays, for example, a screen for giving a message to a user, a screen for displaying the result of a process, and a screen for the user to enter a command to be given to the image forming apparatus 1. The touchscreen 10h also detects a position thereof touched (pressed) by the user and informs the CPU 10a of the touched position.

The user operates the touchscreen 10h; thereby to give a command to the image forming apparatus 1 or to enter data thereinto.

The network interface 10g is a Network Interface Card (NIC) for communicating with the terminal 2 or the like according to Transmission Control Protocol / Internet Protocol (TCP/IP) via the communication line 3.

The modem 10i is a device to perform communication with another facsimile terminal via a fixed-line telephone network based on a protocol such as Group 3 (G3).

The USB interface 10j is a USB interface board for performing communication with a device compatible with USB standards, i.e., a so-called USB device.

Referring to Fig. 3, the ROM 10c or the hard disk 10d stores programs and data for implementing functions of a job log generating portion 101, a log registration processing portion 102, an operator type determination portion 103, an in-house administrator data generating portion 104, an in-house administrator data output portion 105, an external administrator data generating portion 106, an external administrator data output portion 107, a job log database 121, a pseudo information database 122, a device confidential data storage portion 123, an encryption key storage portion 124, and the like. These programs are loaded into the RAM 10b as necessary, whereupon the programs are executed by the CPU 10a.

The whole or a part of the functions of the individual portions illustrated in Fig. 3, and the like may be implemented merely by hardware such as a circuit.

The user operates the image forming apparatus 1 directly to cause the same to execute a copy job, a fax job, a scan job, and other jobs. The user also operates the terminal 2 to cause the image forming apparatus 1 to execute a PC print job.

A person who is an employee of the X-company and manages the image forming apparatus 1 (such a person is hereinafter referred to as an "in-house administrator") can obtain information on a log of jobs executed by the image forming apparatus 1. Further, a person who is an employee of a company such as a manufacturer or a dealer that provides maintenance of the image forming apparatus 1 (such a company is hereinafter referred to as a "Y-company") and manages the image forming apparatus 1 installed in the X-company (such a person is hereinafter referred to as an "external administrator") can also obtain information on a log of jobs executed by the image forming apparatus 1. Note, however, that there are differences between the details of the information obtainable by the in-house administrator and the details of the information obtainable by the external administrator. The differences therebetween will be described later.

Each of the in-house administrator and the external administrator is given a user ID. User IDs are allocated in such a manner that a user corresponding to an in-house administrator, a user corresponding to an external administrator, and a user who is not in charge of the management of the image forming apparatus 1 are distinguished from one another. For example, the first letters of user IDs of the in-house administrator, the external administrator, and the user who is not in charge of the management are "A", "B" , and "C", respectively.

Referring back to Fig. 1, a driver for causing the image forming apparatus 1 to perform a process for printing an image is installed on the terminal 2. A personal computer, a Personal Digital Assistant (PDA), or the like is used as the terminal 2.

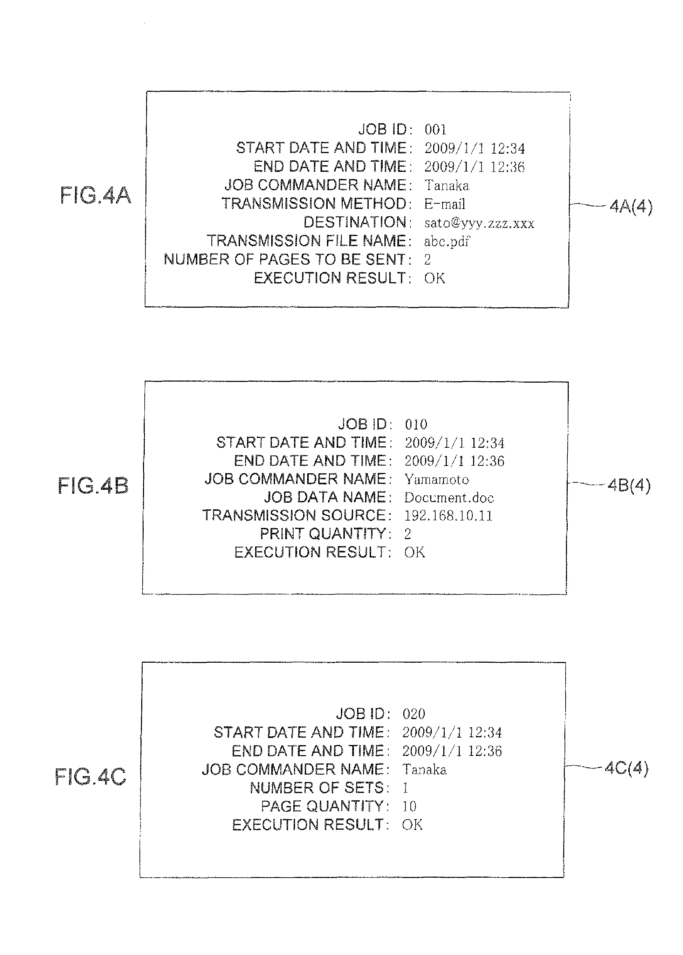

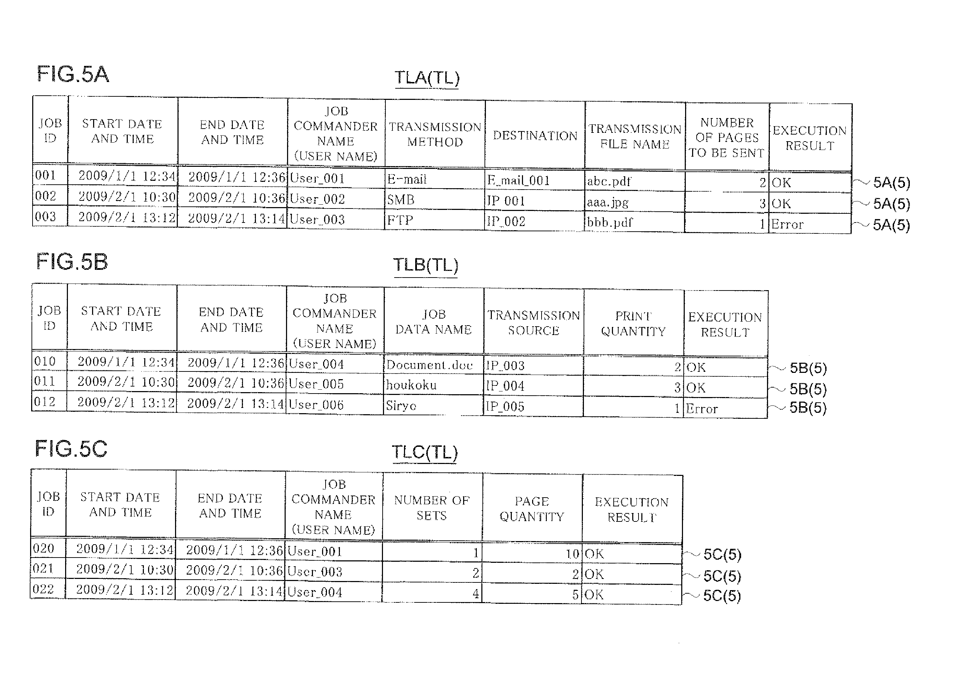

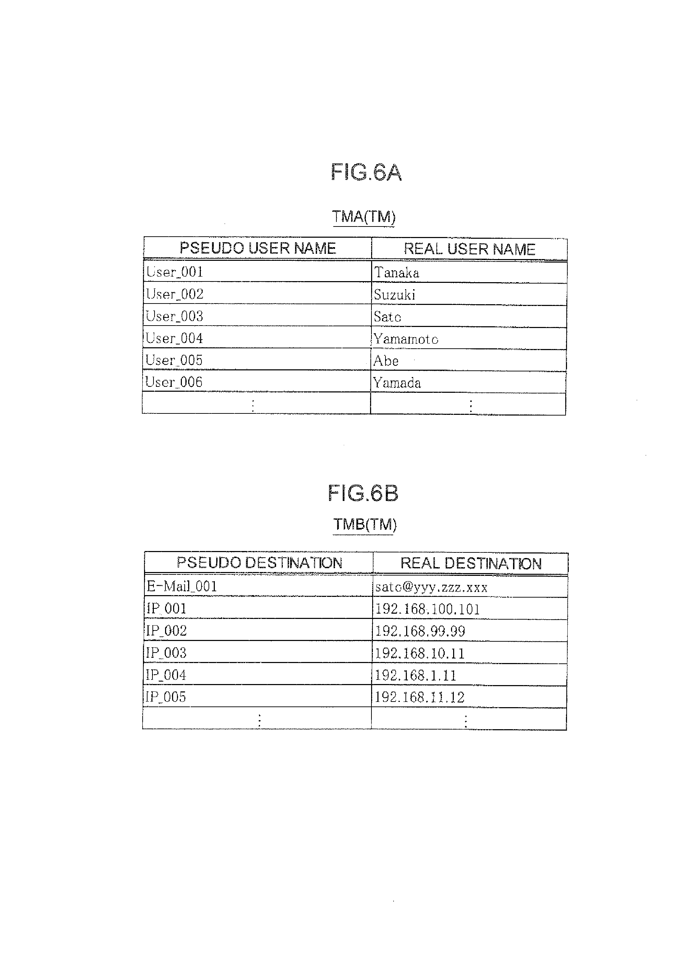

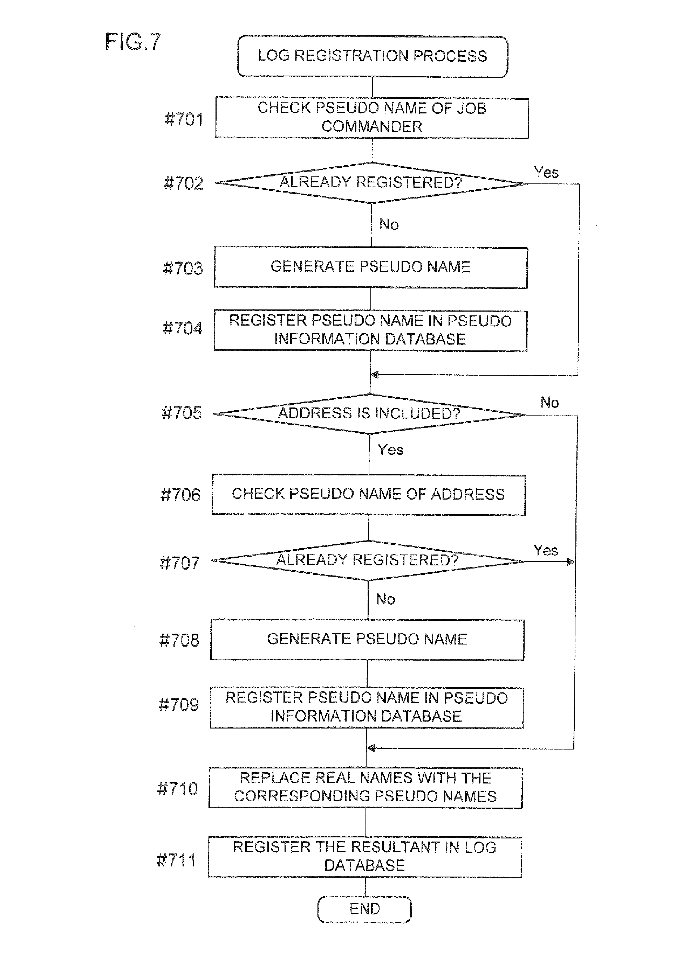

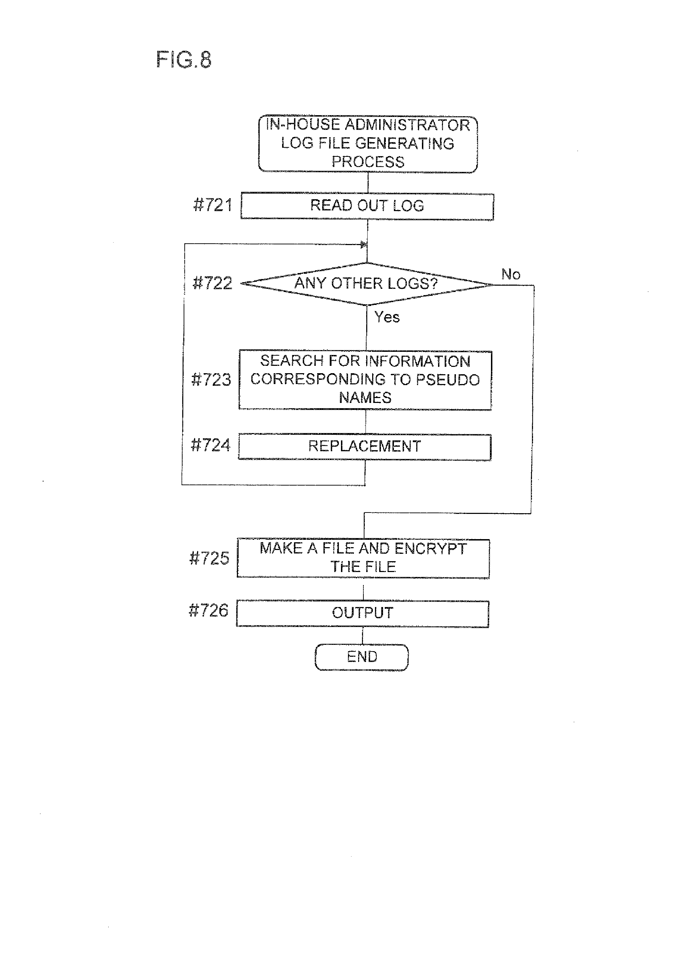

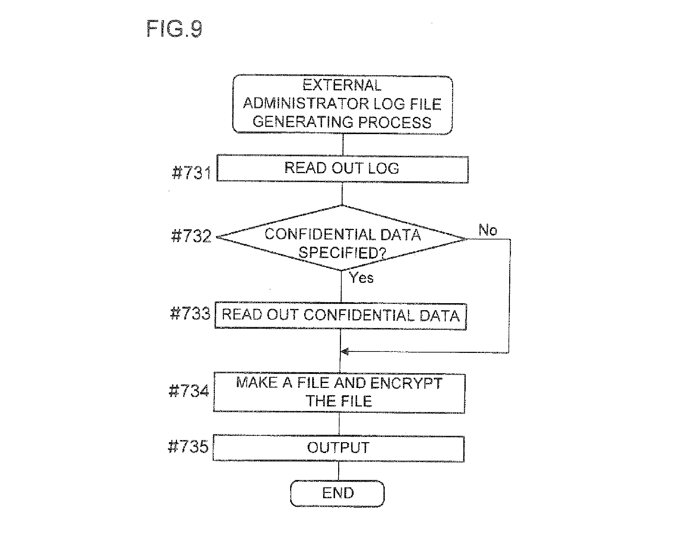

Figs. 4A-4C are diagrams illustrating examples of log data 4; Figs. 5A-5C are diagrams illustrating examples of a job log table TL; Figs. 6A and 6B are diagrams illustrating examples of a pseudo name/real name correspondence table TM; Fig. 7 is a flowchart depicting an example of the flow of a log registration process; Fig. 8 is a flowchart depicting an example of the flow of an in-house administrator log file generating process; and Fig. 9 is a flowchart depicting an example of the flow of an external administrator log file generating process.

Next, a description is given of the functions and the details of processes performed by the individual portions of the image forming apparatus 1 shown in Fig. 3, and the like.

Under the control of the CPU 10a and the like, the scanner 10e, the printer 10f, the network interface 10g, the modem 10i, the USE interface 10j, and so on of the image forming apparatus 1 shown in Fig. 2 execute the variety of jobs described above, as with the conventional art. Every time a job is executed, the CPU 10a issues a unique job ID to the executed job in order to distinguish the job from the other jobs.

Referring to Fig. 3, the job log generating portion 101 of the image forming apparatus 1 generates log data 4 of a log, i.e., information on a job that has been executed by the image forming apparatus 1.

For example, in the case where the image forming apparatus 1 executes a scan job, the job log generating portion 101 generates log data 4A as illustrated in Fig. 4A. A "job ID" of the log data 4A is a job ID that has been given to the job. A "start date and time" and an "end date and time" are respectively a date and time at which the job is started, and a date and time at which the job is completed. A "job commander name" is the name of a user who has given a command to execute the job, i.e., a user name. A "transmission method" indicates a method for sending an image file obtained as a result of the steps of the job, i.e., the scan process in the illustrated example. A "destination" is an address indicating a transmission destination of the image file. A "transmission file name" is a file name of the image file. A "number of pages to be sent" indicates the number of pages of a document reproduced based on the image file. The "number of pages to be sent" is also the number of faces of paper included in a scanned document. An "execution result" indicates whether or not the job has been successfully executed. If the job has been successfully executed, then "OK" is indicated in the execution result. If the job has failed, then "error" is indicated therein.

Alternatively, in the case where the image forming apparatus 1 executes a PC print job, the job log generating portion 101 generates log data 4B as illustrated in Fig. 4B. The "job ID", "start date and time", "end date and time", "job commander name", and "execution result" of the log data 4B have the same meanings as those of the log data 4A. A "job data name" is the name of image data that has been used for executing the job and received from the terminal 2. A "transmission source" is an address indicating the transmission source of the image data. A "print quantity" indicates the number of pages of a printed matter obtained by printing based on the job.

Yet alternatively, in the case where the image forming apparatus 1 executes a copy job, the job log generating portion 101 generates log data 4C as illustrated in Fig. 4C. The "job ID", "start date and time", "end date and time", "job commander name", and "execution result" of the log data 4C have the same meanings as those of the log data 4A and 4B. A "number of sets" indicates the number of sets of copies (printed matters) obtained based on the job. A "page quantity" is the number of pages of the copy.

Log data 4 for a fax job is generated preferably as the log data 4A shown in Fig. 4A. In such a case, "FAX" is specified as the transmission method and a facsimile number (telephone number) of the intended recipient is set as the destination. The "transmission file name" may be left blank.

Referring back to Fig. 3, the job log database 121 contains, therein, a job log table TL (TLA, TLB, or TLC) for each job type as shown in Figs. 5A-5C. Log data 4 generated by the job log generating portion 101 is stored in the job log table TL depending on the job type corresponding to the log data 4. In this regard, however, as is obvious from the comparison between Figs. 4 and 5, information on a part of the items included in the log data 4 is replaced with different information. The process for replacement is performed by the log registration processing portion 102 as described later. Hereinafter, the different information used as replacement information is referred to as a "pseudo name".

The pseudo information database 122 contains, therein, pseudo name/real name correspondence tables TM (TMA and TMB) as shown in Figs. 6A and 6B. Each of the pseudo name/real name correspondence tables TM stores, therein, information indicating correspondence relationships between the information included in the log data 4 and pseudo names with which the information included in the log data 4 is replaced. The pseudo name/real name correspondence table TMA stores pseudo names of job commander names therein. The pseudo name/real name correspondence table TMB stores pseudo names of addresses therein.

The device confidential data storage portion 123 stores, therein, confidential data of the image forming apparatus 1. In particular, the device confidential data storage portion 123 stores data which is not intended for a consumer and which should be known only by a manufacturer or a dealer of the image forming apparatus 1. Hereinafter, such confidential data is referred to as "confidential data 6".

The log registration processing portion 102 replaces information on predetermined items of the log data 4 with pseudo names, and registers the resultant into the job log database 121. The log registration processing portion 102 also registers the correspondence relationship between pre-replacement information and a pseudo name appropriately into the pseudo information database 122.

The following is a description of a process for registering log data 4 into the job log database 122 and a process for registering a pseudo name into the pseudo information database 122 performed by the log registration processing portion 102, with reference to the flowchart of Fig. 7.

When the job log generating portion 101 generates log data 4, the log registration processing portion 102 checks whether or not a pseudo name corresponding to a job commander name included in the log data 4 is registered in the pseudo name/real name correspondence table TMA contained in the pseudo information database 122 (#701).

If a pseudo name corresponding to the job commander name has not yet been registered in the pseudo name/real name correspondence table TMA (No in #702), then the log registration processing portion 102 optionally determines a pseudo name that has not yet been used (#703), and adds a record indicating the determined pseudo name and the job commander name to the pseudo name/real name correspondence table TMA (#704). If such a pseudo name has already been registered (Yes in #702), then the log registration processing portion 102 skips the process of Steps #703 and #704.

The pseudo name may be determined by using a conventional method. For example, only the first character string, e.g., "User_", is commonly determined in advance. Then, in response to the issuance of a new pseudo name, unused sequence number is issued, and the first common character string is combined with the issued sequence number to obtain a character string, e.g., "User_123". The resultant character string is registered as the pseudo name. Alternatively, a hash function is used to convert the job commander name into a pseudo name.

Further, if the log data 4 includes an address (Yes in #705), then the log registration processing portion 102 checks whether or not a pseudo name corresponding to the address is registered in the pseudo name/real name correspondence table TMB contained in the job log database 122 (#706).

If a pseudo name corresponding to the address has not yet been registered in the pseudo name/real name correspondence table TMB (No in #707), then the log registration processing portion 102 optionally determines a pseudo name that has not yet been used (#708), and adds a record indicating the determined pseudo name and the address to the pseudo name/real name correspondence table TMB (#709). If no address is included in the log data 4 from the beginning (No in #705), or, if the address included in the log data 4 has already been registered (Yes in #707), then the log registration processing portion 102 skips the process of Steps #708 and #709.

The log registration processing portion 102 replaces the job commander name and the address included in the log data 4 with the pseudo names corresponding thereto, so that the log data 4 is updated (#710). Hereinafter, post-update log data 4 is referred to as "log data 5". The log registration processing portion 102, then, stores the log data 5 in the job log table TL depending on the type of the job (#711).

For example, log data 5A obtained based on the log data 4 of a scan job, i.e., the log data 4A, is stored in the job log table TLA. Alternatively, log data 5B obtained based on the log data 4 of a PC print job, i.e., the log data 4B, is stored in the job log table TLB. Yet alternatively, log data 5C obtained based on the log data 4 of a copy job, i.e., the log data 4C, is stored in the job log table TLC.

In this way, every time a job is executed, the job log generating portion 101, the log registration processing portion 102, and so on generate a log in which partial information is kept confidential, and the generated log is registered in the job log database 121.

Referring back to Fig. 3, the operator type determination portion 103, the in-house administrator data generating portion 104, the in-house administrator data output portion 105, the external administrator data generating portion 106, and the external administrator data output portion 107 perform a process for outputting a log for an in-house administrator and an external administrator. The encryption key storage portion 124 stores, therein, an encryption key used when a log is outputted. A description is given below of the operator type determination portion 103, the in-house administrator data generating portion 104, the external administrator data generating portion 106, and the encryption key storage portion 124.

The encryption key storage portion 124 stores, therein, an in-house public key PKA that is a public key for an in-house administrator, and an external public key PKB that is a public key for an external administrator. Both the in-house public key PKA and the external public key PKB are public keys used in the public key cryptosystem. The in-house public key PKA makes a pair with an in-house secret key SKA, while the external public key PKB makes a pair with an external secret key SKB. The in-house administrator tightly controls the in-house secret key SKA in order to prevent the same from being stolen by a third party. Likewise, the external administrator tightly controls the external secret key SKB in order to prevent the same from being stolen by a third party.

When intending to output a log to a USB flash memory or the like, the in-house administrator or the external administrator uses his/her user ID to log onto the image forming apparatus 1 in advance. The in-house administrator or the external administrator, then, instructs the image forming apparatus 1 to output a log.

When instructions to output a log are entered, the operator type determination portion 103 determines, based on the user ID used for logging onto the image forming apparatus 1, the type of a person who currently operates the image forming apparatus 1 (such a person is hereinafter called an "operator"). For example, if the first letter of the user ID is "A", then the operator type determination portion 103 determines that the operator is an in-house administrator. If the first letter is "B", then the operator type determination portion 103 determines that the operator is an external administrator. If the character letter is "C", then the operator type determination portion 103 determines that the operator is a user who is not in charge of the log management of the image forming apparatus 1.

In the case where the operator type determination portion 103 determines that the operator is an in-house administrator, the in-house administrator data generating portion 104 generates log data to be outputted in accordance with the process steps shown in Fig. 8.

The in-house administrator data generating portion 104 reads out, in order, a plurality of pieces of log data 5 stored in the individual job log tables TL contained in the job log database 121 (#721 of Fig. 8). It is possible that all the pieces of log data 5 may be read out, or the log data 5 specified by the operator may be read out.

The in-house administrator data generating portion 104 searches for information corresponding to a pseudo name indicated in the log data 5 thus read out in the pseudo name/real name correspondence table TMA or TMB (see Figs. 6A and 6B) (#723). To be specific, if the pseudo name relates to a user name, then the in-house administrator data generating portion 104 searches for a job commander name corresponding to the pseudo name in the pseudo name/real name correspondence table TMA. Alternatively, if the pseudo name relates to an address, then the in-house administrator data generating portion 104 searches for an address corresponding to the pseudo name in the pseudo name/real name correspondence table TMB.

The in-house administrator data generating portion 104 replaces the pseudo name with the information found by the search, i.e., the job commander name or the address; thereby to update the read-out log data 5 (#724). The log data 5 after the update is hereinafter referred to as log data 4'.

In the case of the log data 5A shown in Fig. 5A, information in the two fields of "job commander name" and "destination" are replaced with the real name and the real address. In the case of the log data 5B shown in Fig. 5B, information in the two fields of "job commander name" and "transmission source" are replaced with the real name and the real address. As for the log data 5C shown in Fig. 5C, only information in the field of "job commander name" is replaced with the real name.

After updating all the pieces of the read-out log data 5 with the individual pieces of log data 4' (No in #722), the in-house administrator data generating portion 104 assembles the individual pieces of log data 4' in one file, and encrypts the file by using the in-house public key PKA (#725). Hereinafter, a file in which the individual pieces of log data 4' are assembled and which has been subjected to the encryption process is referred to as a "log file FLA".

The in-house administrator data output portion 105 outputs the log file FLA generated by the in-house administrator data generating portion 104 to a device outside the image forming apparatus 1. The log file FLA is outputted to, for example, a USB flash memory connected to the USB interface 10j.

The in-house administrator can decrypt the log file FLA by using the in-house secret key SKA, so that a file obtained as a result of the decryption can be used.

Referring back to Fig. 3, in the case where the operator type determination portion 103 determines that the operator is an external administrator, the external administrator data generating portion 106 generates log data to be outputted in accordance with the process steps shown in Fig. 9.

The external administrator data generating portion 106 reads out a plurality of pieces of log data 5 stored in the individual job log tables TL contained in the job log database 121 (#731 of Fig. 9). It is possible that all the pieces of log data 5 may be read out, or the log data 5 specified by the operator may be read out.

When the operator specifies confidential data 6 (Yes in #732), the external administrator data generating portion 106 reads out the specified confidential data 6 from the device confidential data storage portion 123.

The external administrator data generating portion 106 assembles the log data 5 and the confidential data 6 thus read out in one file, and encrypts the file by using the external public key PKB (#734). Hereinafter, a file in which the log data 5 and the confidential data 6 are assembled and which has been subjected to the encryption process is referred to as a "log file FLB".

The external administrator data output portion 107 outputs the log file FLB generated by the external administrator data generating portion 106 to a device outside the image forming apparatus 1. The log file FLB is outputted to, for example, a USB flash memory connected to the USB interface 10j (#735). Unlike the case of generating the log file FLA, the process for replacing a pseudo name with the original information is not performed for a case where the log file FLB is generated.

The external administrator can carry the log file FLB to the Y-company and decrypt the log file FLB by using the external secret key SKB, so that a file obtained as a result of the decryption can be used.

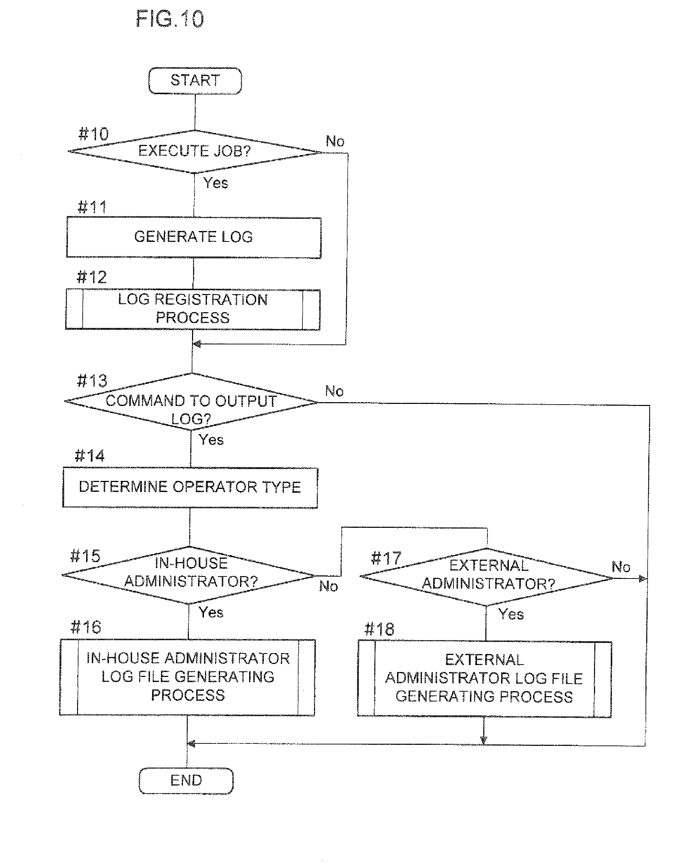

Fig. 10 is a flowchart depicting an example of the overall processing flow of the image forming apparatus 1. The following is a description of the overall process steps for log management in the image forming apparatus 1, with reference to the flowchart of Fig. 10.

Every time an event occurs, the image forming apparatus 1 performs a process in accordance with the event in the following manner.

When executing a job (Yes in #10 of Fig. 10), the image forming apparatus 1 generates a log of the job (#11). The image forming apparatus 1, then, performs a process for registering a log of the job (#12). The steps of the process are the same as those already described in Fig. 7.

When receiving a command to output a log (Yes in #13), the image forming apparatus 1 determines a type of an operator who has given the command (#14). If the operator is determined to be an in-house administrator (Yes in #15), then the image forming apparatus 1 performs a process for generating a log file FLA and outputting the same (#16). The steps of the process are the same as those already described in Fig. 8. On the other hand, if the operator is determined to be an external administrator (Yes in #17), then the image forming apparatus 1 performs a process for generating a log file FLB and outputting the same (#18). The steps of the process are the same as those already described in Fig. 9.

This embodiment makes it possible to provide a log of an image forming apparatus to a manufacturer or a dealer thereof with user's confidential information on the log protected in such a manner that the manufacturer or the dealer finds the state of a failure of the image forming apparatus or the like as per conventional ways if at all possible.

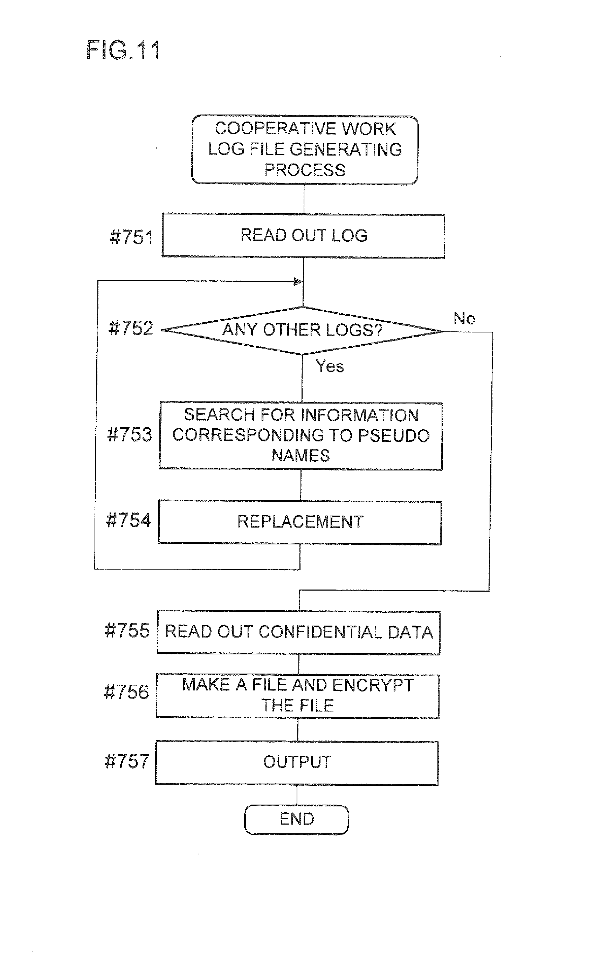

Fig. 11 is a flowchart depicting an example of the flow of a cooperative work log file generating process.

In this embodiment, a public key based on a public key cryptosystem is used for encrypting data. Instead, however, an encryption key based on a common key cryptosystem may be used for encrypting data.

It is sometimes a case where an in-house administrator and an external administrator work together. In such a case, the image forming apparatus 1 generates a log file FLC for the cooperative work in the manner as shown in Fig. 11.

The image forming apparatus 1 allows both the in-house administrator and the external administrator to log thereonto at the same time.

When receiving a command to output a log, the image forming apparatus 1 determines the type of operators who have issued the command (see Yes in #11, and #14 of Fig. 10).

The image forming apparatus 1 determines that the operators are the in-house administrator and the external administrator, and generates a log file FLC according to the process steps shown in Fig. 11.

As with the process of Steps #721-#724 of Fig. 8, the image forming apparatus 1 reads out log data 5 from the job log database 121, and replaces a pseudo name included in the log data 5 with the original information, so that the log data 5 is converted into log data 4' (Steps #751-#754 of Fig. 11). The image forming apparatus 1, then, reads out confidential data 6 from the device confidential data storage portion 123 (#755). The image forming apparatus 1 assembles the log data 4' and the confidential data 6 in one file, and encrypts the file by using the in-house public key PKA, the external public key PKB, or the like, so that a log file FLC is generated (#756).

The image forming apparatus 1, then, outputs the generated log file FLC to a USB flash memory or the like (#757).

This embodiment describes a case of managing a log of an image forming apparatus such as an MFP. This embodiment is also applicable to a case of managing a log of a device such as a server or a personal computer.

In the embodiments discussed above, the overall configurations of the network system NS, and the image forming apparatus 1, the configurations of various portions thereof, the content to be processed, the processing order, the structure of the table, and the like may be altered as required in accordance with the subject matter of the present invention.

While example embodiments of the present invention have been shown and described, it will be understood that the present invention is not limited thereto, and that various changes and modifications may be made by those skilled in the art without departing from the scope of the invention as set forth in the appended claims and their equivalents, as interpreted by the description and drawings.

## Claims

1. An apparatus (1) for log management, the apparatus comprising:
an obtaining portion (101) that obtains a first log (4) of a process that has been performed;
a second log generating portion (102) that creates a second log (5) by replacing confidential information, which is contained in the first log (4) and is to be kept secret, with second information that is different from the confidential information; and
a second log output portion (107) that outputs the second log (5).

2. The apparatus (1) for log management according to claim 1, further comprising a storage portion (122) that stores the confidential information in association with the second information with which said confidential information has been replaced,
wherein
the obtaining portion (101) obtains the first log (4) every time the process is performed, and
every time the obtaining portion (101) obtains the first log (4), the second log generating portion (102) creates the second log (5) in the following manner:
if the storage portion (122) stores, therein, the second information corresponding to the confidential information contained in the first log (4) thus obtained, the second log generating portion (102) replaces said confidential information with said second information, and
if the storage portion (122) does not store, therein, the second information corresponding to the confidential information contained in the first log (4) thus obtained, the second log generating portion (102) replaces said confidential information with new second information.

3. An image processing apparatus (1) for performing image-related processing, the image processing apparatus (1) comprising:
a first log generating portion (101) that creates a first log (4) of the image-related processing;
a second log generating portion (102) that creates a second log (5) by replacing confidential information, which is contained in the first log (4) and is to be kept secret from a person other than a user of the image processing apparatus (1), with second information that is different from the confidential information; and
a second log output portion (107) that outputs the second log (5).

4. The image processing apparatus (1) according to claim 3, further comprising a storage portion (122) that stores the confidential information in association with the second information with which said confidential information has been replaced,
wherein
the obtaining portion (101) obtains the first log (4) every time the process is performed, and
every time the obtaining portion (101) obtains the first log (4), the second log generating portion (102) creates the second log (5) in the following manner:
if the storage portion (122) stores, therein, the second information corresponding to the confidential information contained in the first log (4) thus obtained, the second log generating portion (102) replaces said confidential information with said second information, and
if the storage portion (122) does not store, therein, the second information corresponding to the confidential information contained in the first log (4) thus obtained, the second log generating portion (102) replaces said confidential information with new confidential information.

5. The image processing apparatus (1) according to claim 3 or 4, further comprising
a third log generating portion that creates a third log (4') by replacing the second information contained in the second log (5) with the confidential information corresponding to said second information, and
a third log output portion (105) that outputs the third log (4'),
wherein, if an operator who has made a request for outputting a log is the person other than the user, the second log output portion (107) outputs the second log (5), and
if the operator is the user, the third log output portion (105) outputs the third log (4').

6. A method for log management, the method comprising:
a first step (#10) of obtaining a first log (4) of a process that has been performed;
a second step (#703, #708) of creating a second log (5) by replacing confidential information, which is contained in the first log (4) and is to be kept secret, with second information that is different from the confidential information; and
a third step (#16, #18) of outputting the second log (5).

7. The method for log management according to claim 6, further comprising storing (#704, #709), in a storage portion (122), the confidential information in association with the second information with which said confidential information has been replaced,
wherein
the first step (#10) is executed every time the process is performed, and
every time the first log (4) is obtained in the first step (#10), the second step (#703, #708) includes creating the second log (5) in the following manner:
if the storage portion (122) stores, therein, the second information corresponding to the confidential information contained in the first log (4) thus obtained, the second step (#703, #708) includes replacing said confidential information with said second information, and
if the storage portion (122) does not store, therein, the second information corresponding to the confidential information contained in the first log (4) thus obtained, the second step (#703, #708) includes replacing said confidential information with new confidential information.

8. The method for log management according to claim 6 or 7, wherein
the first step includes obtaining, as the first log (4), a log of a process that has been performed by an image processing apparatus (1), and
if an operator who has made a request for outputting a log is a user of the image processing apparatus (1) (Yes in #15), the third step includes outputting (#16) the log by replacing the second information contained in the second log (5) with the confidential information corresponding to said second information.

9. A non-transitory computer-readable storage medium storing thereon a computer program used in a computer for managing a log, the computer program causing the computer to perform:
first processing (#10) of obtaining a first log (4) of a process that has been performed;
second processing (#703, #708) of creating a second log (5) by replacing confidential information, which is contained in the first log (4) and is to be kept secret, with second information that is different from the confidential information; and
third processing (#16, #18) of outputting the second log (5).

10. The non-transitory computer-readable storage medium according to claim 9, the computer program causing the computer to further perform:
fourth processing (#704, #709) of storing, in a storage portion (122), the confidential information in association with the second information with which said confidential information has been replaced,
wherein
the first processing (#10) is executed every time the process is performed, and
every time the first log (4) is obtained in the first processing (#10), the second processing includes creating the second log in the following manner:
if the storage portion (122) stores, therein, the second information corresponding to the confidential information contained in the first log (4) thus obtained, the second step includes replacing said confidential information with said second information, and
if the storage portion (122) does not store, therein, the second information corresponding to the confidential information contained in the first log thus obtained, the second step includes replacing said confidential information with new confidential information.

11. The non-transitory computer-readable storage medium according to claim 9 or 10, wherein
the first processing includes obtaining, as the first log (4), a log of a process that has been performed by an image processing apparatus (1), and
if an operator who has made a request for outputting a log is a user of the image processing apparatus (1) (Yes in #15), the third processing includes outputting (#16) the log by replacing the second information contained in the second log (5) with the confidential information corresponding to said second information.
